# EUROPEAN PATENT SPECIFICATION

(11) **EP 4 116 519 B1**
(45) Date of publication and mention of the grant of the patent: **14.08.2024**
(21) Application number: 22183413.8
(22) Date of filing: 06.07.2022
(51) Int. Cl.: E04G 5/00, E04G 7/26, E04G 5/12, F16B 7/04, F16B 2/10, F16B 2/12, F16B 5/06

(54) **CLAMP AND METHOD**
KLEMME UND VERFAHREN
PINCE ET PROCÉDÉ

(30) Priority: 06.07.2021 GB 202109853
(43) Date of publication of application: 11.01.2023
(73) Proprietor: Nolan, Jonathan, London SE21 8LE (GB)
(72) Inventor: Nolan, Jonathan, London SE21 8LE (GB)
(74) Representative: Page White Farrer

(56) References cited:
- DE-U1- 29 600 218
- GB-A- 2 240 806
- GB-A- 2 386 621
- US-A- 4 566 819

## Description

### Field of the Invention

The present disclosure relates a clamp for assembling structures. Some examples relate to a clamp for assembling scaffolding.

### Background

Know scaffolding assembly techniques include assembling sheets together to provide a scaffolding structure.

Known scaffolding assembly techniques include drilling through corrugated sheets to connect sheets together. This consumes time and energy in performing the drilling. Further, once the scaffolding is disassembled, the corrugated sheets may no longer be suitable for use once in other scaffolding structures due to the holes drilled into them. This can provide a trip hazard.

"J-clamps" can be used to clamp sheets together to form scaffolding structures. J-clamps must be applied to each corner of the overlapping section of sheets. A labourer must apply four J-clamps to cover each corner, which takes time during the performance of securing each clamp. Further, the sheets may slip if one of the J-clamps becomes loose, which may occur as one of the other J-clamps is tightened. DE 296 00 218 U1 discloses a roofing clamp for corrugated sheets with a pair of scaffolding tube clamps opening in opposing directions so as to engage two parallel tubes located either side of the fastening. A longitudinal interconnecting clamping plate with pattern corresponding to the corrugated sheets extends between the tube clamps.

### Summary of invention

In a first aspect of the invention, there is provided a clamp according to claim 1, comprising: a first clamping portion comprising a tube clamp for clamping a tube; a second clamping portion comprising a hole for receiving a first bolt; wherein the clamp is configured such that when the second clamping portion is laid on top of the first clamping portion, the second clamping portion can be secured to the first clamping portion by receiving the first bolt in the hole of the second clamping portion and then securing the first bolt; wherein a top face and a bottom face of the first clamping portion have a repeated pattern of folds; wherein a bottom face of the second clamping portion has the same repeated pattern of folds as the top face and the bottom face of the first clamping portion; wherein a part of a first sheet can be held in between the tube and the first clamping portion by placing the part of first sheet in between the tube and the first clamping portion and clamping the tube to the first clamping portion using the tube clamp wherein a part of a second sheet can be held in between the first clamping portion and the second clamping portion by placing the part of the second sheet (105) in between the first clamping portion and the second clamping portion and then securing the second clamping portion to the first clamping portion by receiving the first bolt in the hole of the second clamping portion and then securing the first bolt; wherein the first sheet comprises a corrugated sheet and the second sheet comprises a corrugated sheet

According to some examples, the first clamping portion comprises the first bolt.

According to some examples, the first bolt is integral to the first clamping portion.

According to some examples, the clamp comprises a nut and a washer for securing the first bolt.

According to some examples, the part of the second sheet and the part of the first sheet have the same repeated pattern of folds as the top face and the bottom face of the first clamping portion.

According to some examples, tube clamp comprises: a tube receiving section; a first hinge; a second hinge; a second bolt which is rotatable around the first hinge; a bolt receiving section for receiving the second bolt, wherein the bolt receiving section is rotatable around the second hinge; wherein the second bolt can be received in the bolt receiving section by rotating at least one of the second bolt and the bolt receiving section; wherein the tube can be secured in the tube receiving section by receiving the tube in the tube receiving section and then securing the second bolt in the bolt receiving section to hold the tube in the tube receiving section; wherein the second bolt can be secured in the bolt receiving section using a second nut.

According to some examples, the second bolt comprises a thread.

According to some examples, the tube can be released from the tube receiving section by releasing the second bolt, wherein releasing the second bolt comprises loosening the second nut.

According to some examples, the clamp is configured to assemble part of a scaffolding structure.

According to some examples, the first sheet is part of a scaffolding structure.

According to some examples, the second sheet is part of the scaffolding structure.

According to some examples, a second clamp similar to the clamp may be used to secure a third sheet to the first sheet.

According to a second aspect of the invention, there is provided a method according to claim 7, comprising: clamping a tube using a tube clamp of a first clamping portion of a clamp; arranging a second clamping portion on top of the first clamping portion; receiving a first bolt in a hole of the second clamping portion of the clamp; securing the second clamping portion to the first clamping portion by securing the first bolt; securing a part of a first sheet in between the tube and the first clamping portion by placing the part of first sheet in between the tube and the first clamping portion and clamping the tube to the first clamping portion using the tube clamp wherein a top face and a bottom face of the first clamping portion have a repeated pattern of folds; wherein a bottom face of the second clamping portion has the same repeated pattern of folds as the top face and the bottom face of the first clamping portion.

According to some examples, the first clamping portion comprises the first bolt.

According to some examples, the first bolt is integral to the first clamping portion.

According to some examples, wherein the method comprises: securing a part of a second sheet in between the first clamping portion and second clamping portion by placing the part of the second sheet in between the first clamping portion and the second clamping portion and then securing the second clamping to the first clamping portion by receiving the first bolt in the hole of the second clamping portion and then securing the first bolt.

According to some examples, securing the first bolt comprises using a nut and a washer.

According to some examples, the part of the second sheet and the part of the first sheet have the same repeated pattern of folds as the top face and the bottom face of the first clamping portion.

According to some examples, the first sheet comprises a corrugated sheet and the second sheet comprises a corrugated sheet.

According to some examples, the method comprises: securing the tube in a tube receiving section of the tube clamp by: receiving the tube in the tube receiving section; rotating at least one of a second bolt and a bolt receiving section of the clamp to receive the second bolt in the bolt receiving section of the tube clamp and bring at least part of the second bolt into contact with the tube to hold the tube in the tube receiving section; securing the second bolt in the bolt receiving section; wherein the second bolt is rotatable around a first hinge and the tube receiving section is rotatable around a second hinge.

According to some examples, the second bolt can be secured in the bolt receiving section using a second nut.

According to some examples, the second bolt comprises a thread.

According to some examples, the method comprises: releasing the tube from the tube receiving section by releasing the second bolt.

According to some examples, the method comprises assembling part of a scaffolding structure.

According to some examples, the first sheet is part of a scaffolding structure.

According to some examples, the second sheet is part of the scaffolding structure.

According to some examples, the method comprises using a second clamp similar to the clamp to secure a third sheet to the first sheet.

According to a third aspect not forming part of the invention, there is provided a method of manufacturing the clamp of the first aspect.

### Brief description of Figures

Figure 1 shows a profile view of a clip clipping two sheets together;
Figure 2A shows a first position of the structure when clipping two sheets together;
Figure 2B shows second position of the structure when clipping two sheets together;

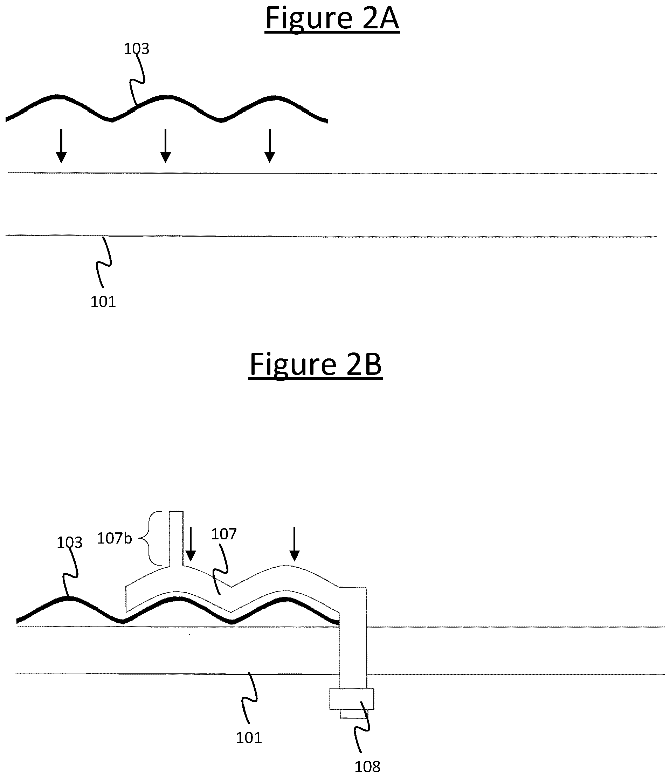

Figure 2A shows a third position of the structure when clipping two sheets together;
Figure 2A shows a fourth position of the structure when clipping two sheets together;

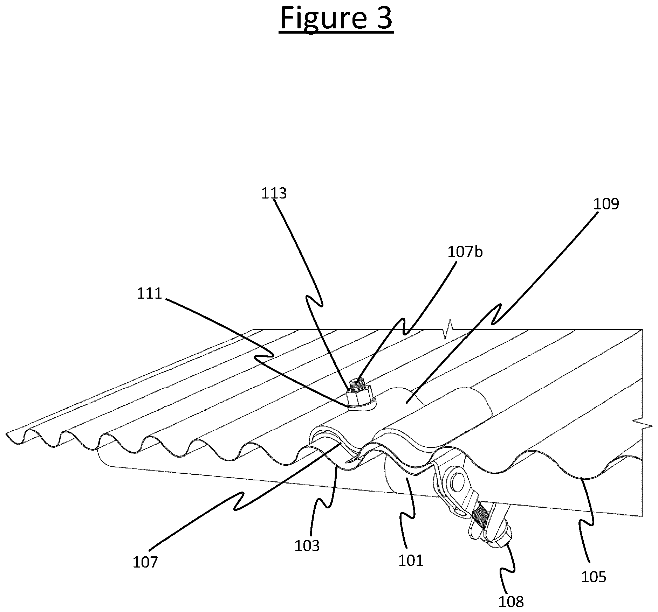

Figure 3 shows a clip holding together two sheets;

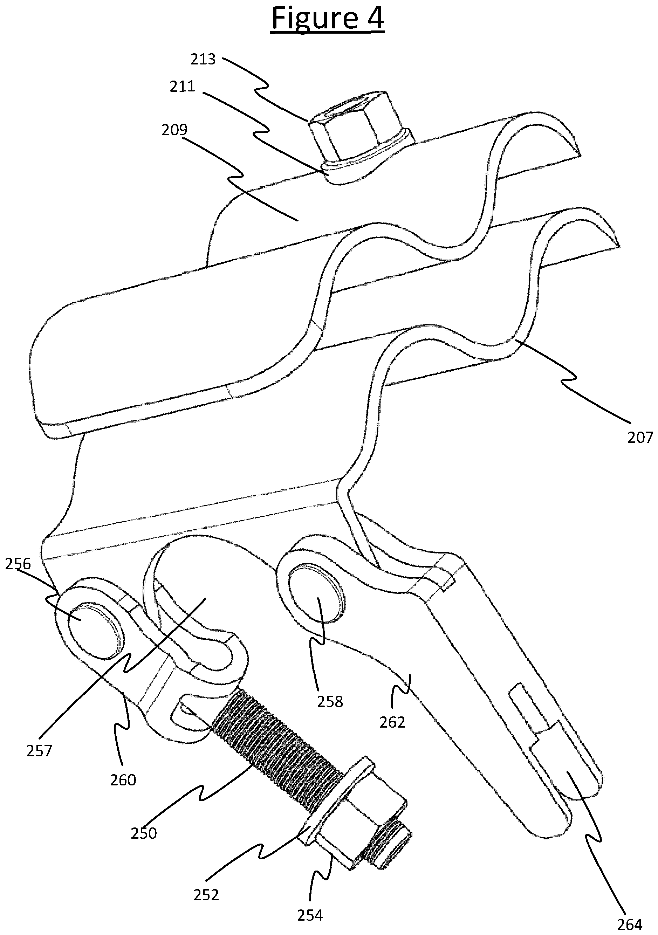

Figure 4 shows a clip;

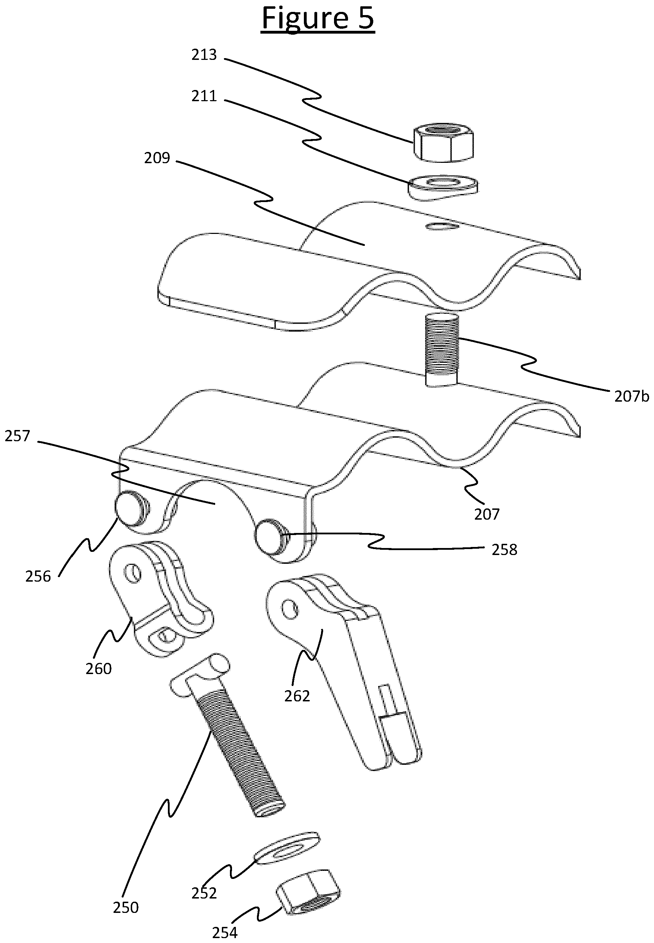

Figure 5 shows an exploded view of a clip;

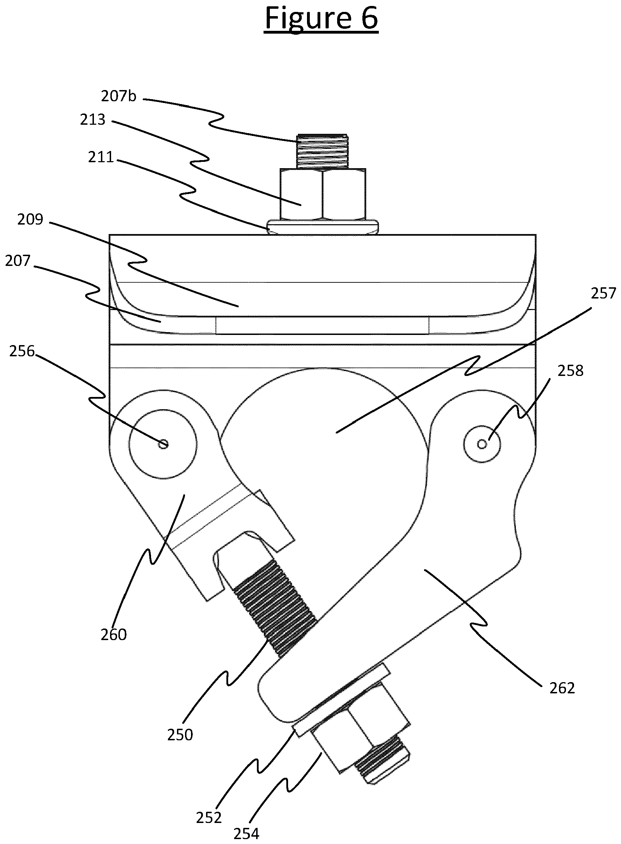

Figure 6 shows a clip in an orientation for locking to a pole; and

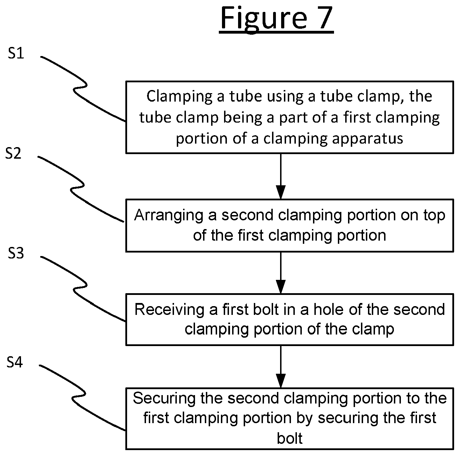

Figure 7 shows a method flow diagram.

### Detailed description

Examples provided herein provide a clip (which is considered to be a "clamp") that can be used to clip sheets together. The clip can be used to clip sheets together to assemble a scaffolding structure.

The sheets clipped together are "corrugated". The sheets may have repetitive folds on at least one surface. The folds may repeat with a set periodicity. Each trough and peak may have the same height.

In some examples, the clip allows a constructor to assemble a scaffolding structure with less manual labour while maintaining the initial state of the sheets used to assemble the scaffolding structure. In some prior art scaffolding assembly methods, drilling is performed which damages the structure of the sheet. Examples avoid such damage.

Further, the clip (clamp) only needs to be clamped in a single spot (area of the overlapping sheets) and does not need to be secured in each corner of an overlap of two sheets (as is the case when using J-clamps, for example). This is more secure and safe, as using multiple J-clamps can lead to loosening of other J-clamps as each J-clamp is applied, which can lead to sheets slipping relative to one another. Further, the amount of manual labour required to fix two sheets together is reduced, as according to some examples the clamp only needs to be secured to a scaffolding pipe at one point and to the two sheets at one point.

According to some examples, a user is only required to secure two bolts in order to secure two sheets and a pipe together.

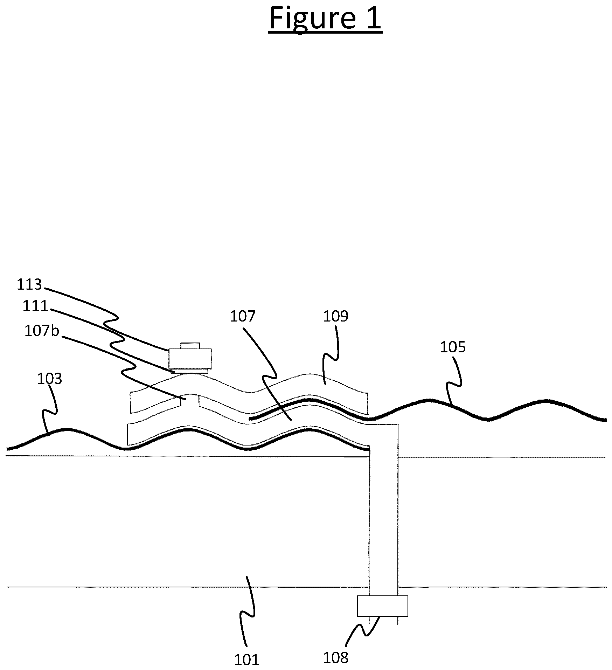

Figure 1 shows a side view of an example of a bottom sheet 103 and a top sheet 105 secured to one another using top clamp portion 109 and bottom clamp portion 107. A clamp can be considered to comprise top clamp portion 109 and bottom clamp portion 107. The bottom clamp portion 107 also secures the structure to tube 101. Tube 101 may comprise a pipe, for example.

As shown Figure 1, bottom sheet 103 has a repeating fold pattern with a set periodicity and distance between each peak and trough of the pattern. Top sheet 103 also has a repeating fold pattern with a set periodicity and distance between each peak and trough of the pattern. Although for both the bottom and top sheets an approximately sinusoidal shape is used, it will be understood that in other examples other repeating patterns may be used.

In some examples, at least one of top sheet 105 and bottom sheet 103 may comprise a corrugated sheet.

Top clamp portion 109 has a shape that has a similar repeating patten to top sheet 105. As such, when top clamp portion 109 is laid on top of top sheet 105, the top clamp portion conforms to the shape of top sheet 105. This prevents the top sheet 105 and bottom sheet 103 slipping when they are clamped together. In the example of Figure 1, this shape is on both the bottom and top edges of top clamp portion 109, however in other examples the pattern may only be on the bottom edge of top clamp portion 109.

The main body of bottom clamp portion 107 has a shape that has a similar repeating patten to top sheet 103. As such, when bottom clamp portion 107 is laid in between top sheet 105 and bottom sheet 103, the bottom clamp portion 107 conforms to the shape of top sheet 105 and bottom sheet 103. This prevents the top sheet 105 and bottom sheet 103 slipping when they are clamped together. Bottom clamp portion 107 may comprise a plate.

In the example of Figure 1, bottom clamp portion 107 also comprises an integral bolt section 107b. A hole is provided in top clamp portion 109 through which the integral bolt 107b can pass. It should however be noted that in other examples, there may be no integral bolt section and a bolt which is separate from top claim portion 107 can be used. Bolt 107b may comprise a screw thread.

Top clamp portion 109 can be secured to bottom clamp portion 107 by securing bolt 107b to top clamp portion 109 using securing means 111, 113. In the example of Figure 1, the securing means comprises a washer 111 and a nut 113. This secures top sheet 105 between top clamp portion 109 and bottom clamp portion 107. Top clamp portion 109 may comprise a plate.

A tube clamp 108 can be used to secure bottom clamp portion 107 to tube 101. Further details of an example tube clamp 108 are discussed below with respect to Figures 3 to 6. Tube 101 may comprise a pipe, for example. This secures bottom clamp portion 107 to tube 101 and secures bottom sheet 103 in between bottom clamp portion 107 and tube 101.

By using tube clamp 108, top clamp portion 109 and bottom clamp portion 107 tube 101 can be secured to bottom sheet 103. By using securing means 111, 113, top clamp portion 109 can secure top clamp portion 109 to top sheet 103. As such, by using tube clamp 108, securing means 111, 113, top clamp portion 109 and bottom clamp portion 107, it is possible to secure bottom sheet 103 to top sheet 105 and tube 101. A clamping apparatus (a clamp) may be considered to comprise tube clamp 108, securing means 111, 113, top clamp portion 109 and bottom clamp portion 107. The clamping apparatus can be used to assemble stable scaffolding structures.

It should be noted that although the repeating fold pattern of top sheet 105 and bottom sheet 103 is only replicated over two periods for top clamp portion 109 and bottom clamp portion 107, the repeating fold pattern may be repeated more than twice for the top clamp portion 109 and bottom clamp portion 107 in other examples.

Figures 2A to 2D show stages of securing bottom sheet 103 to top sheet 105 and tube 101. In other words, Figures 2A to 2D shows stages of providing the structure of Figure 1. Figures 2A to 2D show side profiles of part of a scaffolding structure.

In Figure 2A, a first sheet 103 is laid down on top of tube 101. First sheet 103 is then in physical contact with tube 101.

In Figure 2B, bottom clamp portion 107 is placed on top of the top face of sheet 103. Further, bottom clamp portion 107 is fastened to tube 101 using tube clamp 108. Bottom clamp portion 107 is then in physical contact with the top face of sheet 103.

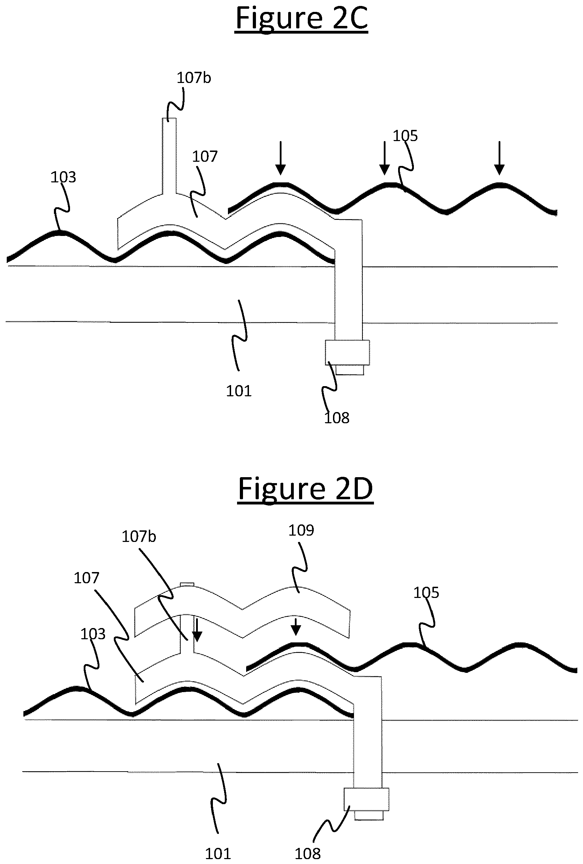

In Figure 2C, top sheet 105 is laid on top of bottom clamp portion 107. Top sheet 105 overlaps bottom sheet 103 by one repeated fold in the example of Figure 2D, however in other examples bottom clamp portion 107 and top clamp portion 109 may have more repeated folds and the overlap may be more than one fold.

Following Figure 2C:
- the bottom face of top sheet 105 is in contact with the top face of bottom clamp portion 107;
- the top face of bottom sheet 103 is in contact with the bottom face of bottom clamp portion 107;
- the bottom face of bottom sheet 103 are in contact with tube 101 at each trough of bottom sheet 103.

In Figure 2D, top clamp portion 109 is placed on top of top sheet 105. To perform this, bolt 107b is aligned with a hole in top clamp portion 109 through which bolt 107b can pass through.

After Figure 2D, top clamp portion 109 can be secured to bottom clamp portion 107 by using securing means 111, 113 to provide the structure shown in Figure 1. For example, a nut 113 and washer 111 can be fastened to secure top clamp portion 109 can be secured to bottom clamp portion 107. The fastening can be performed using any suitable means, for example, a wrench.

Figure 3 shows a perspective view of the structure shown in Figure 1. As can be seen in Figure 3, there is a small gap between the overlapping sections of top sheet 105 and bottom sheet 103, inside which lies bottom clamp portion 107. Bottom clamp portion 107 conforms to the shape of the bottom edge of top sheet 105 and to the top edge of bottom sheet 103.

Figure 3 also shows an example of tube clamp 108 for securing bottom clamp portion 107 to tube 101. An example tube clamp such as tube clamp 108 is discussed in more detail below with respect to Figures 4 to 6.

Figure 4 shows a top clamp portion 209 comprising an integral washer 211 and integral nut 213. This can be used to secure a bolt in between top clamp portion 209 and bottom clamp portion 207. In other examples a washer and nut which is not integral to top clamp portion may be provided separately.

Figure 4 shows parts making up an example tube clamp such as tube clamp 108. The tube clamp is a part of bottom clamp portion 207.

The tube clamp comprises a first hinge 256 about which a U-shaped portion 260 can rotate. U-shaped portion 260 holds a bolt 250. As U-shaped portion 260 rotates about hinge 256, bolt 250 can also rotate around hinge 256.

At the end of bolt 250, there is provided a nut 254 and optional washer 252. Nut 254 and optionally, washer 252, can be moved up and down bolt 250.

Bottom clamp portion 207 also comprises a second hinge 258 about which receiving section 262 can rotate. Receiving section 262 comprises aperture 264 which is shaped such that bolt 250 can be received at a part of an aperture 264 but nut 254 and washer 252 are too wide to pass through. Bolt 250 can be rotated into aperture 264 by moving either, or both, of U-shaped portion 250 and receiving section 262 about their respective hinges 256 and 258. Nut 254 and washer 252 can then be moved along bolt 250 to secure U-shaped portion 264 and receiving section 262 in place. This can be used to provide a quick release mechanism for securing and clamping a tube (e.g., tube 101) in a tube receiving section 257.

Figure 5 shows an exploded view of top clamp portion 209 and bottom clamp portion 207. Top clamp portion 209 comprises washer 211 and bolt 213. Bolt 213 may comprise a screw thread.

Bottom clamp portion 207 comprises bolt section 207b and two hinges 256 and 262. U-shaped portion 260 rotates around hinge 256 and receiving section 262 rotates around hinge 258.

U-shaped portion 260 can be used to hold a T-shaped bolt 250 along with washer 252 and nut 254. The T-shaped bolt comprises a vertical section upon which washer 252 and nut 254 can be held. A horizontal section of the T-shaped bolt 250, which runs perpendicular to the vertical section, can be held in U-shaped portion 254.

Figure 6 shows a top clamp portion 209 held on top of a bottom clamp portion 207. Although no sheets or tubes are shown, the top clamp portion 209 and bottom clamp portion 207 can be used to secure two sheets and a tube (pipe) together as in, for example, Figure 1.

Bolt 207b can be secured to top clamp portion 209 using washer 211 and nut 213.

Figure 6 shows a tube clamp such as tube clamp 108. The clamp is in a position in which a tube can be clamped within tube receiving section 257. Bolt 250 is secured in an aperture 264 (not shown in Figure 6 but visible in Figures 4 and 5) using washer 252 and nut 254.

When a tube (e.g., tube 101) is secured in tube receiving section 257, receiving section 262 is prevented from rotating about hinge 258 towards U-shaped receiving section 260 by the diameter of the tube. By tightening nut 254 and washer 252, receiving section 262 is also prevented from rotating about hinge 258 away from U-shaped receiving section 260. A tube can therefore be held securely in place in tube receiving section 257 by securing bolt 250.

Bolt 250 can be positioned inside aperture 264 by rotating U-shaped portion 260 about hinge 256, and/or by rotating receiving section 262 towards bolt 250 about hinge 258. This can be performed when washer 252 and nut 254 have been removed from bolt 250 or have been sufficiently loosened.

Figure 7 shows a method flow diagram. The method may be performed using a clamp, such as any of the clamps shown in Figures 1 to 6 for example.

At S1, a tube is clamped using a tube clamp. The tube clamp may be a part of a first clamping portion of a clamping apparatus (e.g., a clamp (clip) as shown in any of Figures 1 to 6). According to some examples, the tube may be clamped to the bottom of the first clamping portion.

At S2, a second clamping portion is positioned on top of the first clamping portion.

At S3, which may occur during S2 or after S2, a first bolt is received in a hole of the second clamping portion. According to some examples, the first bolt may be an integral part of the first clamping portion. According to some examples, the first bolt may be provided separately to the first clamping portion.

At S4, the first clamping portion is secured to the second clamping portion by securing the first bolt. This could be done, for example, by using a nut and washer to secure the first bolt after it has been placed through the hole of the of the second clamping portion.

After S4, the first clamping portion is secured to both the tube and the second clamping portion. The tube may be secured to the bottom of the first clamping portion and the second clamping portion may be secured to the top of the first clamping portion.

A first sheet is placed in between the first clamping portion and the tube, and a second sheet may be placed in between the first clamping portion and the second clamping portion. This effectively secures the first sheet and second sheet together. This can be used to assemble scaffolding structures.

A top face and a bottom face of the first clamping portion may have a repeated pattern of folds. A bottom face of the second clamping portion may have the same repeated pattern of folds as the top face and the bottom face of the first clamping portion.

It will of course be understood that the examples described are by way of example only and are not intended to limit the scope of the invention. It will be also understood that any of the aforementioned examples may be combined as long as they fall within the scope of the invention, which is only defined by the appended claims.

The Figures are schematic in nature and not necessarily drawn to scale. It will be further understood that aspects of the described examples can be combined in any way, as long as they fall within the scope of the invention, which is only defined by the appended claims.

## Claims

1. A clamp comprising:
a first clamping portion (107) comprising a tube clamp (108) for clamping a tube (101);
a second clamping portion (109) comprising a hole for receiving a first bolt (107b) of the clamp;
wherein the clamp is configured such that when the second clamping portion (109) is laid on top of the first clamping portion (107), the second clamping portion (109) can be secured to the first clamping portion (107) by receiving the first bolt (107b) in the hole of the second clamping portion (109) and then securing the first bolt (107b);
wherein a top face and a bottom face of the first clamping portion (107) have a repeated pattern of folds;
wherein a bottom face of the second clamping portion (109) has the same repeated pattern of folds as the top face and the bottom face of the first clamping portion (107); whereby
a part of a first sheet (103) can be held in between the tube (101) and the first clamping portion (107) by placing the part of first sheet (103) in between the tube (101) and the first clamping portion (107) and clamping the tube (101) to the first clamping portion (107) using the tube clamp (108);
a part of a second sheet (105) can be held in between the first clamping portion (107) and the second clamping portion (109) by placing the part of the second sheet (105) in between the first clamping portion (107) and the second clamping portion (109) and then securing the second clamping portion (105) to the first clamping portion (107) by receiving the first bolt (107b) in the hole of the second clamping portion (109) and then securing the first bolt (107b);
the first sheet (103) comprises a corrugated sheet and the second sheet (105) comprises a corrugated sheet.

2. A clamp according to claim 1, comprising:
a nut (113) and a washer (111) for securing the first bolt (107b).

3. A clamp according to claim 1 or claim 2, wherein the part of the second sheet (105) and the part of the first sheet (103) have the same repeated pattern of folds as the top face and the bottom face of the first clamping portion (107).

4. A clamp according to any preceding claim, wherein the tube clamp (108) comprises:
a tube receiving section (257);
a first hinge (256);
a second hinge (258);
a second bolt (250) which is rotatable around the first hinge (256);
a bolt receiving section for receiving the second bolt (250), wherein the bolt receiving section is rotatable around the second hinge (258);
wherein the second bolt (250) can be received in the bolt receiving section by rotating at least one of the second bolt (250) and the bolt receiving section;
wherein the tube (101) can be secured in the tube receiving section by receiving the tube (101) in the tube receiving section (257) and then securing the second bolt (250) in the bolt receiving section to hold the tube (101) in the tube receiving section (257);
wherein the second bolt (250) can be secured in the bolt receiving section using a second nut (254).

5. A clamp according to claim 4, wherein the second bolt (250) comprises a thread.

6. A clamp according to claim 4 or claim 5, wherein the tube (101) can be released from the tube receiving section (257) by releasing the second bolt (250), wherein releasing the second bolt (250) comprises loosening the second nut (254).

7. A method comprising:
clamping a tube (101) using a tube clamp (108) of a first clamping portion (107) of a clamp;
arranging a second clamping portion (109) on top of the first clamping portion (107);
receiving a first bolt (107b) in a hole of the second clamping portion (109) of the clamp;
securing the second clamping portion (109) to the first clamping portion (107) by securing the first bolt (107b);
whereby the method comprises:
securing a part of a first sheet (103) in between the tube (101) and the first clamping portion (107) by placing the part of first sheet (103) in between the tube (101) and the first clamping portion (107) and clamping the tube (101) to the first clamping portion (107) using the tube clamp (108);
wherein a top face and a bottom face of the first clamping portion (107) have a repeated pattern of folds;
wherein a bottom face of the second clamping portion (109) has the same repeated pattern of folds as the top face and the bottom face of the first clamping portion (107).

8. A method according to claim 7, wherein the method comprises:
securing a part of a second sheet (105) in between the first clamping portion (107) and the second clamping portion (109) by placing the part of the second sheet (105) in between the first clamping portion and the second clamping portion (109) and then securing the second clamping portion (109) to the first clamping portion (107) by receiving the first bolt (107b) in the hole of the second clamping portion (109) and then securing the first bolt (107b).

9. A method according to claim 8, wherein the part of the second sheet (105) and the part of the first sheet (103) have the same repeated pattern of folds as the top face and the bottom face of the first clamping portion (107).

10. A method according to any of claims 7 to 9, wherein the method comprises:
securing the tube (101) in a tube receiving section (257) of the tube clamp (108) by:
receiving the tube (101) in the tube receiving section (257);
rotating at least one of a second bolt (250) and a bolt receiving section of the clamp to receive the second bolt (250) in the bolt receiving section of the tube clamp (108) and to bring at least part of the second bolt (250) into contact with the tube (101) to hold the tube (101) in the tube receiving section (257);
securing the second bolt (250) in the bolt receiving section;
wherein the second bolt (250) is rotatable around a first hinge (256) and the tube receiving section (257) is rotatable around a second hinge (258).

11. A method according to any of claim 10, wherein the method comprises:
releasing the tube (101) from the tube receiving section (257) by releasing the second bolt (250).

## Patentansprüche

1. Klemme, umfassend:
einen ersten Klemmabschnitt (107), der eine Rohrklemme (108) zum Festklemmen eines Rohrs (101) umfasst;
einen zweiten Klemmabschnitt (109), der ein Loch zum Aufnehmen eines ersten Bolzens (107b) der Klemme umfasst;
wobei die Klemme derart ausgestaltet ist, dass, wenn der zweite Klemmabschnitt (109) auf den ersten Klemmabschnitt (107) gelegt wird, der zweite Klemmabschnitt (109) durch Aufnehmen des ersten Bolzens (107b) in dem Loch des zweiten Klemmabschnitts (109) und dann Befestigen des ersten Bolzens (107b) an dem ersten Klemmabschnitt (107) befestigt werden kann;
wobei eine obere Fläche und eine untere Fläche des ersten Klemmabschnitts (107) ein wiederholtes Faltenmuster aufweisen;
wobei eine untere Fläche des zweiten Klemmabschnitts (109) dasselbe wiederholte Faltenmuster wie die obere Fläche und die untere Fläche des ersten Klemmabschnitts (107) aufweist;
wobei
ein Teil eines ersten Blechs (103) durch Platzieren des Teils des ersten Blechs (103) zwischen dem Rohr (101) und dem ersten Klemmabschnitt (107) und Festklemmen des Rohrs (101) unter Verwendung der Rohrklemme (108) an dem ersten Klemmabschnitt (107) zwischen dem Rohr (101) und dem ersten Klemmabschnitt (107) gehalten werden kann;
ein Teil eines zweiten Blechs (105) durch Platzieren des Teils des zweiten Blechs (105) zwischen dem ersten Klemmabschnitt (107) und dem zweiten Klemmabschnitt (109) und dann Befestigen des zweiten Klemmabschnitts (105) an dem ersten Klemmabschnitt (107) durch Aufnehmen des ersten Bolzens (107b) in dem Loch des zweiten Klemmabschnitts (109) und dann Befestigen des ersten Bolzens (107b) zwischen dem ersten Klemmabschnitt (107) und dem zweiten Klemmabschnitt (109) gehalten werden kann;
das erste Blech (103) ein Wellblech umfasst und das zweite Blech (105) ein Wellblech umfasst.

2. Klemme nach Anspruch 1, umfassend:
eine Mutter (113) und eine Unterlegscheibe (111) zum Befestigen des ersten Bolzens (107b).

3. Klemme nach Anspruch 1 oder Anspruch 2, wobei der Teil des zweiten Blechs (105) und der Teil des ersten Blechs (103) dasselbe wiederholte Faltenmuster wie die obere Fläche und die untere Fläche des ersten Klemmabschnitts (107) aufweisen.

4. Klemme nach einem der vorhergehenden Ansprüche, wobei die Rohrklemme (108) Folgendes umfasst:
einen Rohraufnahmeabschnitt (257);
ein erstes Scharnier (256);
ein zweites Scharnier (258);
einen zweiten Bolzen (250), der um das erste Scharnier (256) drehbar ist;
einen Bolzenaufnahmeabschnitt zum Aufnehmen des zweiten Bolzens (250), wobei der Bolzenaufnahmeabschnitt um das zweite Scharnier (258) drehbar ist;
wobei der zweite Bolzen (250) durch Drehen mindestens eines des zweiten Bolzens (250) und des Bolzenaufnahmeabschnitts in dem Bolzenaufnahmeabschnitt aufgenommen werden kann;
wobei das Rohr (101) durch Aufnehmen des Rohrs (101) in dem Rohraufnahmeabschnitt (257) und dann Befestigen des zweiten Bolzens (250) in dem Bolzenaufnahmeabschnitt in dem Rohraufnahmeabschnitt befestigt werden kann, um das Rohr (101) in dem Rohraufnahmeabschnitt (257) zu halten;
wobei der zweite Bolzen (250) unter Verwendung einer zweiten Mutter (254) in dem Bolzenaufnahmeabschnitt befestigt werden kann.

5. Klemme nach Anspruch 4, wobei der zweite Bolzen (250) ein Gewinde umfasst.

6. Klemme nach Anspruch 4 oder Anspruch 5, wobei das Rohr (101) durch Lösen des zweiten Bolzens (250) aus dem Rohraufnahmeabschnitt (257) gelöst werden kann, wobei das Lösen des zweiten Bolzens (250) Lockern der zweiten Mutter (254) umfasst.

7. Verfahren, umfassend:
Festklemmen eines Rohrs (101) unter Verwendung einer Rohrklemme (108) eines ersten Klemmabschnitts (107) einer Klemme;
Anordnen eines zweiten Klemmabschnitts (109) auf dem ersten Klemmabschnitt (107);
Aufnehmen eines ersten Bolzens (107b) in einem Loch des zweiten Klemmabschnitts (109) der Klemme;
Befestigen des zweiten Klemmabschnitts (109) durch Befestigen des ersten Bolzens (107b) an dem ersten Klemmabschnitt (107);
wobei das Verfahren Folgendes umfasst:
Befestigen eines Teils eines ersten Blechs (103) zwischen dem Rohr (101) und dem ersten Klemmabschnitt (107) durch Platzieren des Teils des ersten Blechs (103) zwischen dem Rohr (101) und dem ersten Klemmabschnitt (107) und Festklemmen des Rohrs (101) an dem ersten Klemmabschnitt (107) unter Verwendung der Rohrklemme (108);
wobei eine obere Fläche und eine untere Fläche des ersten Klemmabschnitts (107) ein wiederholtes Faltenmuster aufweisen;
wobei eine untere Fläche des zweiten Klemmabschnitts (109) dasselbe wiederholte Faltenmuster wie die obere Fläche und die untere Fläche des ersten Klemmabschnitts (107) aufweist.

8. Verfahren nach Anspruch 7, wobei das Verfahren Folgendes umfasst:
Befestigen eines Teils eines zweiten Blechs (105) zwischen dem ersten Klemmabschnitt (107) und dem zweiten Klemmabschnitt (109) durch Platzieren des Teils des zweiten Blechs (105) zwischen dem ersten Klemmabschnitt und dem zweiten Klemmabschnitt (109) und dann Befestigen des zweiten Klemmabschnitts (109) an dem ersten Klemmabschnitt (107) durch Aufnehmen des ersten Bolzens (107b) in dem Loch des zweiten Klemmabschnitts (109) und dann Befestigen des ersten Bolzens (107b).

9. Verfahren nach Anspruch 8, wobei der Teil des zweiten Blechs (105) und der Teil des ersten Blechs (103) dasselbe wiederholte Faltenmuster wie die obere Fläche und die untere Fläche des ersten Klemmabschnitts (107) aufweisen.

10. Verfahren nach einem der Ansprüche 7 bis 9, wobei das Verfahren Folgendes umfasst:
Befestigen des Rohrs (101) in einem Rohraufnahmeabschnitt (257) der Rohrklemme (108) durch:
Aufnehmen des Rohrs (101) in dem Rohraufnahmeabschnitt (257);
Drehen mindestens eines eines zweiten Bolzens (250) und eines Bolzenaufnahmeabschnitts der Klemme, um den zweiten Bolzen (250) in dem Bolzenaufnahmeabschnitt der Rohrklemme (108) aufzunehmen und um zumindest einen Teil des zweiten Bolzens (250) in Kontakt mit dem Rohr (101) zu bringen, um das Rohr (101) in dem Rohraufnahmeabschnitt (257) zu halten;
Befestigen des zweiten Bolzens (250) in dem Bolzenaufnahmeabschnitt;
wobei der zweite Bolzen (250) um ein erstes Scharnier (256) drehbar ist und der Rohraufnahmeabschnitt (257) um ein zweites Scharnier (258) drehbar ist.

11. Verfahren nach einem von Anspruch 10, wobei das Verfahren Folgendes umfasst:
Lösen des Rohrs (101) von dem Rohraufnahmeabschnitt (257) durch Lösen des zweiten Bolzens (250).

## Revendications

1. Dispositif de serrage, comprenant :
une première portion de serrage (107) comprenant un dispositif de serrage de tube (108) pour serrer un tube (101) ;
une seconde portion de serrage (109) comprenant un trou pour recevoir un premier boulon (107b) du dispositif de serrage ;
dans lequel le dispositif de serrage est configuré de telle sorte que, lorsque la seconde portion de serrage (109) est placée en dessus de la première portion de serrage (107), la seconde portion de serrage (109) puisse être fixée à la première portion de serrage (107) en effectuant la réception du premier boulon (107b) dans le trou de la seconde portion de serrage (109) et puis en fixant le premier boulon (107b) ;
dans lequel une face supérieure et une face inférieure de la première portion de serrage (107) ont un motif répété de plis ;
dans lequel une face inférieure de la seconde portion de serrage (109) a le même motif répété de plis que la face supérieure et la face inférieure de la première portion de serrage (107) ;
moyennant quoi
une partie d'une première tôle (103) peut être tenue entre le tube (101) et la première portion de serrage (107) en plaçant la partie de première tôle (103) entre le tube (101) et la première portion de serrage (107) et en serrant le tube (101) sur la première portion de serrage (107) en utilisant le dispositif de serrage de tube (108) ;
une partie d'une seconde tôle (105) peut être tenue entre la première portion de serrage (107) et la seconde portion de serrage (109) en plaçant la partie de la seconde tôle (105) entre la première portion de serrage (107) et la seconde portion de serrage (109) et puis en fixant la seconde portion de serrage (105) à la première portion de serrage (107) en effectuant la réception du premier boulon (107b) dans le trou de la seconde portion de serrage (109) et puis en fixant le premier boulon (107b) ;
la première tôle (103) comprend une tôle ondulée et la seconde tôle (105) comprend une tôle ondulée.

2. Dispositif de serrage selon la revendication 1, comprenant :
un écrou (113) et une rondelle (111) pour fixer le premier boulon (107b).

3. Dispositif de serrage selon la revendication 1 ou la revendication 2, dans lequel la partie de la seconde tôle (105) et la partie de la première tôle (103) ont le même motif répété de plis que la face supérieure et la face inférieure de la première portion de serrage (107).

4. Dispositif de serrage selon une quelconque revendication précédente, dans lequel le dispositif de serrage de tube (108) comprend :
une section de réception de tube (257) ;
une première articulation (256) ;
une seconde articulation (258) ;
un second boulon (250) qui peut être mis en pivotement autour de la première articulation (256) ;
une section de réception de boulon pour recevoir le second boulon (250),
dans lequel la section de réception de boulon peut être mise en pivotement autour de la seconde articulation (258) ;
dans lequel le second boulon (250) peut être reçu dans la section de réception de boulon en mettant en pivotement au moins un du second boulon (250) et de la section de réception de boulon ;
dans lequel le tube (101) peut être fixé dans la section de réception de tube en effectuant la réception du tube (101) dans la section de réception de tube (257) et puis en fixant le second boulon (250) dans la section de réception de boulon pour tenir le tube (101) dans la section de réception de tube (257) ;
dans lequel le second boulon (250) peut être fixé dans la section de réception de boulon en utilisant un second écrou (254).

5. Dispositif de serrage selon la revendication 4, dans lequel le second boulon (250) comprend un filet.

6. Dispositif de serrage selon la revendication 4 ou la revendication 5, dans lequel le tube (101) peut être enlevé de la section de réception de tube (257) en enlevant le second boulon (250), dans lequel l'enlèvement du second boulon (250) comprend le desserrage du second écrou (254).

7. Procédé, comprenant :
le serrage d'un tube (101) en utilisant un dispositif de serrage de tube (108) d'une première portion de serrage (107) d'un dispositif de serrage ;
l'agencement d'une seconde portion de serrage (109) en dessus de la première portion de serrage (107) ;
la réception d'un premier boulon (107b) dans un trou de la seconde portion de serrage (109) du dispositif de serrage ;
la fixation de la seconde portion de serrage (109) à la première portion de serrage (107) en fixant le premier boulon (107b) ;
moyennant quoi le procédé comprend :
la fixation d'une partie d'une première tôle (103) entre le tube (101) et la première portion de serrage (107) en plaçant la partie de première tôle (103) entre le tube (101) et la première portion de serrage (107) et en serrant le tube (101) sur la première portion de serrage (107) en utilisant le dispositif de serrage de tube (108) ;
dans lequel une face supérieure et une face inférieure de la première portion de serrage (107) ont un motif répété de plis ;
dans lequel une face inférieure de la seconde portion de serrage (109) a le même motif répété de plis que la face supérieure et la face inférieure de la première portion de serrage (107).

8. Procédé selon la revendication 7, dans lequel le procédé comprend :
la fixation d'une partie d'une seconde tôle (105) entre la première portion de serrage (107) et la seconde portion de serrage (109) en plaçant la partie de la seconde tôle (105) entre la première portion de serrage et la seconde portion de serrage (109) et puis en fixant la seconde portion de serrage (109) à la première portion de serrage (107) en effectuant la réception du premier boulon (107b) dans le trou de la seconde portion de serrage (109) et puis en fixant le premier boulon (107b).

9. Procédé selon la revendication 8, dans lequel la partie de la seconde tôle (105) et la partie de la première tôle (103) ont le même motif répété de plis que la face supérieure et la face inférieure de la première portion de serrage (107).

10. Procédé selon l'une quelconque des revendications 7 à 9, dans lequel le procédé comprend :
la fixation du tube (101) dans une section de réception de tube (257) du dispositif de serrage de tube (108) par l'intermédiaire de :
la réception du tube (101) dans la section de réception de tube (257) ;
la mise en pivotement d'au moins un d'un second boulon (250) et d'une section de réception de boulon du dispositif de serrage pour recevoir le second boulon (250) dans la section de réception de boulon du dispositif de serrage de tube (108) et pour mettre au moins une partie du second boulon (250) en contact avec le tube (101) pour tenir le tube (101) dans la section de réception de tube (257) ;
la fixation du second boulon (250) dans la section de réception de boulon ;
dans lequel le second boulon (250) peut être mis en pivotement autour d'une première articulation (256) et la section de réception de tube (257) peut être mise en pivotement autour d'une seconde articulation (258).

11. Procédé selon l'une quelconque de la revendication 10, dans lequel le procédé comprend :
l'enlèvement du tube (101) à partir de la section de réception de tube (257) par l'intermédiaire de l'enlèvement du second boulon (250).
